(19) Europäisches Patentamt

European Patent Office

Office européen des brevets

(11) **EP 0 735 496 A1**

(12) **EUROPEAN PATENT APPLICATION**

(43) Date of publication:
02.10.1996 Bulletin 1996/40

(51) Int. Cl.$^6$: **G06F 17/21**, G06K 15/00

(21) Application number: 95302137.5

(22) Date of filing: 30.03.1995

(84) Designated Contracting States:
AT BE CH DE DK ES FR GB GR IE IT LI LU MC NL PT SE

(71) Applicant: **EASTERN GRAPHICS TECHNOLOGY CO. LTD.**
**Taipei (TW)**

(72) Inventor: **Huang, Yi Hui**
**Taipei, (TW)**

(74) Representative: **Hamilton, Alistair et al**
**Mewburn Ellis,**
**York House,**
**23 Kingsway**
**London WC2B 6HP (GB)**

(54) **A storage compression process for structural character & graphics**

(57) A storage compression process for structural character and graphics by applying a novel stroke table, a novel glyph description file and a set of calculation formulas to construct a character font such as a Chinese character or Japanese Kanzi, or graphics such as icon or animation pattern. An index value is assigned to the same or similar stroke of a character or graphics. A separated stroke reference table is setup in stroke table to contain the index value and coordinates values of shape control points and width value of the stroke. Glyph description file contains stroke ID, coordinates of the first shape control point, index value, delta value of coordinates of second shape control point and after against the first shape control point, and delta value of stroke width. Through a set of of predetermined formulas, the coordinates of the second shape control points and after and the width of each stroke can be determined, thus free glyph description file from storing the coordinates of all shape control points and width value of every stroke.

FIG. 1

## Description

The present invention relates to a storage compression method and technique for structural character and graphics, particularly to a process which uses stroke table, glyph description file and a set of calculation formulas to construct structural character or graphics such as Chinese character, Japanese Kanzi, Icon pattern and animation figures, etc.

In a conventional high quality font generation process for structural character such as Chinese character or Japanese Kanzi, it usually uses stroke to construct character. The basic structure of using stroke to construct character usually includes a stroke table and a glyph description file. Take a conventional standard Chinese character set for example, the stroke table usually contains several hundred items of stroke description. Every stroke has a unique identification number (ID). And there is a Graphic description language to describe how each stroke being generated. Glyph description file contains detailed records of the composed stroke of each character, and the value of the position and width of each stroke.

The stroke table of a conventional Chinese character set usually needs more than 70 KB of storage size (K is 1024 ,B is byte). A glyph description file usually needs more than 1 MB of storage size (M is one million). It is a huge storage requirement. How to effectively compress glyph description file so that minimum amount of Read Only Memory (ROM) or Disk space can contain as many character sets as possible has been a constant efforts of many font developers.

In a conventional glyph description file, a character is represented by a parameter table of its composing strokes. A stroke ID has a corresponding parameter table which contains shape control point information and width value of each stroke. Upon entering a stroke ID, stroke position and width information can be retrieved from parameter table thus to construct a character font. The method mentioned above is used by most font developers nowadays. There is still much room for improvement.

It is accordingly an aim of the present invention to provide a novel and improved method and technique of space compression for structural character and graphics such that a great deal of computer memory or storage space can be saved when these character sets or graphics being used. The present invention also contemplate to improve the processing speed of the driver through this space compression method and technique.

The present invention develops two structural regularities of Chinese character as basis to conceive this space compression method and technique. Regularity one: for those strokes that have same ID, there is no much difference in variation value of relative position of many shape control points from second shape control point and after relative to the first shape control point. The variation value of corresponding stroke width is also no much difference. Regularity two: for those strokes that have same ID, there is a high probability that their next strokes also have same ID, and there is no much difference in relative position of the first shape control point of the next stroke.

Base on aforementioned two regularities, the present invention develops a unique stroke index to facilitate the determination of delta value (i.e. variation value) of coordinates and width of the second shape control point and after. The present invention also develop a unique stroke reference table and calculation formulas to facilitate the determination of shape control point coordinates and width of all strokes, such that there is no need to store all shape control point coordinates and width value of every stroke in glyph description file. Thereby the storage requirement of glyph description file can be reduced substantially. It is estimated that, applying the present invention, the storage space for a set of Chinese characters can be reduced about 20% - 30% and still maintain same quality level. Furthermore, by applying aforementioned method and technique, the buffer size needed for the driver during the processing can also be reduced (from about 4K to 3K).

Additional advantages of the present invention will be made apparent in the following description of a preferred exemplary embodiment having reference to the accompanying drawings. The drawings are only to serve for reference and illustrative purpose, and do not intend to limit the scope of the present invention.

In the drawings:

FIG. 1 is a schematic diagram of an example of parameter setting for a Chinese character in a conventional glyph description file.

FIG. 2 is a schematic diagram of an example of parameter setting for another Chinese character in a conventional glyph description file.

FIG. 3 is a schematic diagram of font stroke information format in a conventional glyph description file.

FIG. 4 is a schematic diagram of stroke parameter format example for a Chinese character in a conventional glyph description file (for a Chinese character shown in Fig. 2).

Fig. 5 is a schmatic diagram of stroke parameter example for another Chinese character (shows partly) in a conventional glyph description file (for same stroke shown in Fig. 4).

Fig. 6 is a schematic diagram of stroke parameter format example in glyph description file of the present invention (taking same stroke shown in Fig. 4).

Fig. 7 is a schematic diagram of stroke reference table format of the present invention.

Fig. 8 is a schematic diagram of an example of stroke parameter format of tile first shape control point in a conventional glyph description file.

Fig. 9 is a schematic diagram of an example of stroke parameter format in glyph description file of the present invention for same stroke shown in Fig.8.

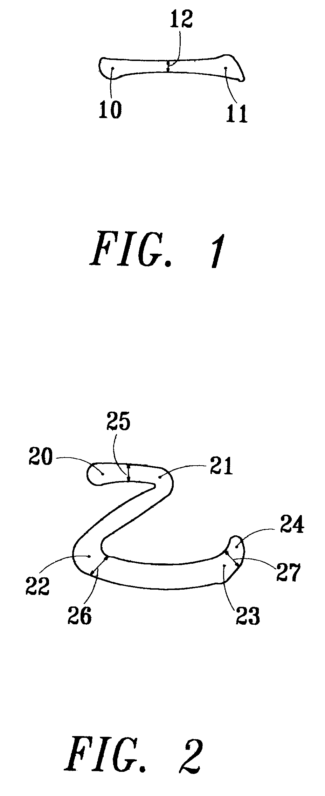

FIG. 1 illustrates an example of stroke parameter setting in a conventional glyph description file. There are two shape control points 10,11 and one width position 12 that need parameter setting to determine a stroke. Fig. 2 illustrates an example of stroke parameter setting in a conventional glyph description file for another stroke. There are five shape control points 20,21,22,23,24, and three width value positions 25,26,27 that need parameter setting for that stroke.

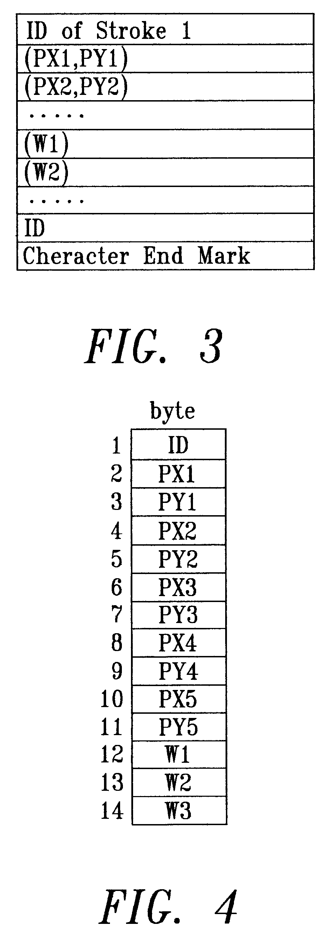

FIG. 3 shows a stroke font information format in a conventional glyph description file. General speaking, there is a stroke ID which occupies one or two bytes of storage space (one byte can represent up to 256 different strokes, two bytes are needed when stroke number is more than 256). The coordinates of each shape control point take two bytes of storage space ( one byte for PX1 which is for X coordinates of the first control point, another byte for PY1 which is for Y coordinates of the first control point). Each stroke width value (such as W1 or W2) also needs one byte of storage space.

Fig. 4 illustrates an example of stroke parameter format for a Chinese stroke (for same stroke shown in Fig. 2) in a conventional glyph description file, it takes total 14 bytes of storage space.

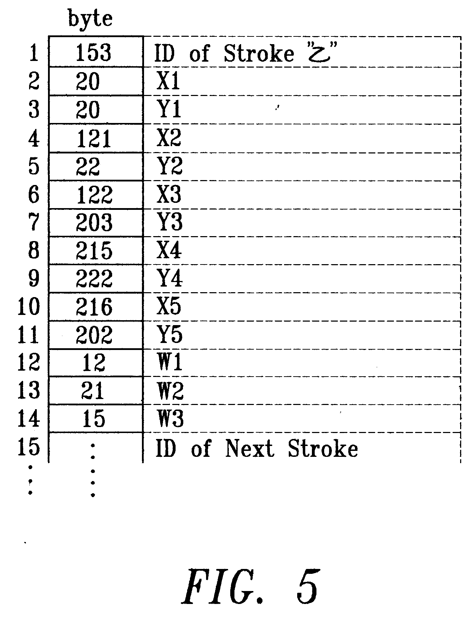

Fig. 5 illustrates an example of stroke parameter setting for another Chinese character (only partly) in a conventional glyph description file. Base on above examples, it is clear that in a conventional glyph description file two bytes of storage space are needed to store the coordinates (X,Y) value of a shape control point of a stroke. It needs another byte of space to store the width value of a stroke section.

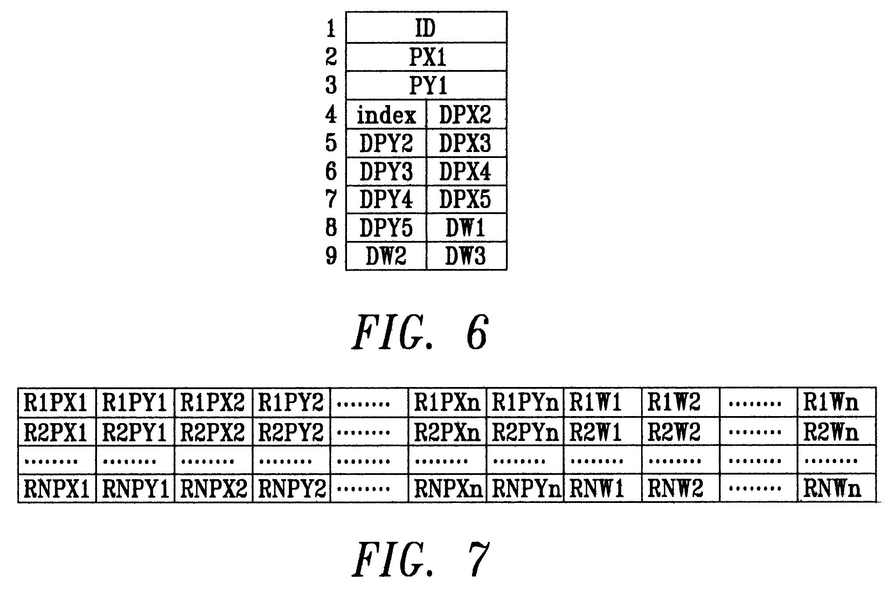

Fig. 6 illustrates an example of stroke parameter format after applying the present invention, using same stroke shown in Fig. 4. Stroke ID and the coordinates of the first control point (PX1,PY1) are recorded same as that of conventional glyph description file. However the "index" value is a unique entry of the present invention. The value of index is set between the range of 1 and 15 depends on utilization frequency of that particular stroke, and it needs 1/2 byte (i.e. 4 bits) of storage space. DPXn and DPYn are delta value of coordinates of nth shape control point against the first shape control point, DWm is delta value of stroke width of mth section of the stroke against the stroke width value of the first section of that stroke. Delta values of coordinates (DPXn,DPYn) and stroke width (DWm) are also unique entries of the present invention. The value of DPXn, DPYn and DWm are limited between 1 and 15 respectively, and each of them can be represented and stored by 1/2 byte (i.e. 4 bits) of storage space.

Fig. 7 is a schematic diagram of an example of stroke reference table format of the present invention. Rt represents the index value of the stroke (where t is between the range of 1 and 15).

According to the present invention, the position coordinates and stroke width value after the first shape control point can be determined by the followings:

$$PXn = DPXn + PX1 - RtPX1 + RtPXn$$

$$PYn = DPYn + PY1 - RtPY1 + RtPYn$$

$$Wm = DWm + RtWm$$

Referring to Fig. 4, it takes 14 bytes of storage space to store a certain Chinese stroke in a conventional glyph description file. After applying the present invention, same stroke needs only 9 bytes of storage space (referring to Fig. 6). The information of stroke reference table of the present invention takes from existing stroke table, therefore it does not increase storage requirement by this addition.

By inventor's study and analysis, about 85 % to 95% of strokes in a conventional Chinese character set can apply the compression method of the present invention. Thus it can save substantial amount of storage space. The method and technique set forth above are developed mainly based on the first regularity developed by present invention mentioned above.

Base on the second regularity developed by the inventor, glyph description file can be compressed further. Details are set forth below:

For examples:

1. Characters of same radical mostly have the characteristics of second regularity, such as characters

" 未 "

in

村，材，杉，

etc.

2. For those characters that have similar first and second strokes, there is a high probability that they have similar relative position for the first shape control point of the second stroke, such as

"旭旦",

"机".

3. For those characters that have the same first stroke, the relative position of the first shape control point of the second stroke may be very close even though their second strokes are different, such as

"末","大".

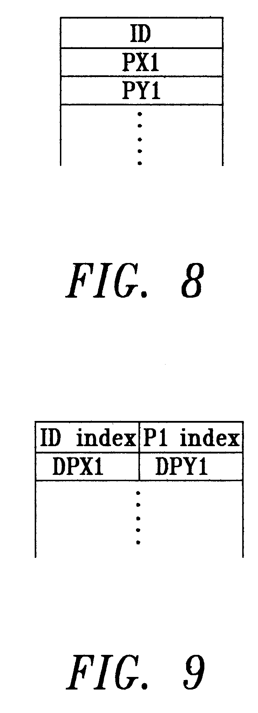

Base on the second regularity, the present invention has developed a Stroke ID and the First Shape Control Point Reference Table which is included in the stroke table. Through the second regularity and above reference table, the present invention has further reduced the storage requirement of glyph description file. Referring to Fig. 9 for an example, Stroke (ID index) and the reference value of the first shape control point of a stroke (P1 index) takes 1/2 byte of storage space respectively. The delta value of coordinates of the first shape control point (DPX1, DPY1) also take 1/2 byte of storage space respectively. Therefore the position of the first shape control point of next stroke needs only two bytes of storage space, while a conventional method and format needs three bytes of storage space (as shown in Fig. 8, i.e. ID, PX1, PY1).

Base on inventor's study and analysis, next stroke ID can be found by aforementioned method in about 80% to 90% of circumstances, while the position of the first shape control point of next stroke can be found in about 50% to 60% of circumstances.

As a summary, through the space compression method and technique of the present invention, the storage space needed for a set of Chinese font can be saved by 20% to 30% at the same quality level. The buffer size needed for the driver during font generation can also be reduced (from about 4K to 3K). The method and technique of the present invention can also be applied to structural graphics such as icon pattern or animation figure. Throughout above descriptions, the words of "variation" and "delta" are used interchangeably and are essentially set for same meaning.

It is thus clear that the objects of the present invention set forth herein, as well as those made apparent from the foregoing description, are efficiently attained. While the preferred embodiment of the invention has been set forth for purpose of disclosure, modifications of the disclosed embodiment of the invention as well as other embodiments thereof may occur to those skilled in the art. Accordingly, the appended claims are intended to cover all embodiments which do not depart from the spirit and the scope of the invention.

**Claims**

1. A storage compression process for structural character and graphics using a stroke table, a glyph description file and a set of formulas to constructure a character or a graphics, wherein:

   - said stroke table includes a stroke reference table and stroke ID and first shape control point reference table, said stroke reference table contains values of stroke ID, stroke index, coordinates of shape control points and stroke width; said stroke ID and first shape control point reference table contains values of stroke ID index, first shape control point index and coordinates variation of the first shape control point of said stroke;
   - said glyph description file includes values of stroke ID, coordinates of the first shape control point, stroke index, variation of coordinates of shape control points after the first shape control point and variation of stroke width,
   - said formulas including formulas for determination of coordinates of shape control points after the first shape control points and width value of said stroke.

2. A storage compression process of claim one wherein the value of said stroke index does not exceed fifteen.

3. A storage compression process of claim one wherein the value of said stroke ID index, said first shape control point index and said coordinates variation of the first shape control point does not exceed fifteen respectively.

4. A storage compression process of claim one wherein the value of variation of coordinates of said shape control points and of said stroke width does not exceed fifteen respectively.

5. A storage compression process of claim one wherein said formula for determination of coordinates of said shape control points being defined as follows:

$$PXn = DPXn + PX1 - RtPX1 + RtPXn$$

$$PYn = DPYn + PY1 - RtPY1 + RtPYn$$

where DPXn, DPYn is value of variation of the coordinates of nth shape control point of a stroke, Rt is the tth set of stroke reference table.

6. A storage compression process of claim one wherein said formula for determination of stroke width may be defined as follows:

$$Wm = DWm + RtWm$$

where Wm is the sroke width of m section of a stroke. Rt is the tth set of stroke reference table.

7. A storage compression process of claim one wherein said structural character is Chinese character or Japanese Kanzi.

8. A storage compression process of claim one wherein said structural graphics is icon pattern or animation graphics.

FIG. 1

FIG. 2

| |
|---|
| ID of Stroke 1 |
| (PX1,PY1) |
| (PX2,PY2) |
| . . . . . |
| (W1) |
| (W2) |
| . . . . . |
| ID |
| Cheracter End Mark |

# FIG. 3

byte

| | |
|---|---|
| 1 | ID |
| 2 | PX1 |
| 3 | PY1 |
| 4 | PX2 |
| 5 | PY2 |
| 6 | PX3 |
| 7 | PY3 |
| 8 | PX4 |
| 9 | PY4 |
| 10 | PX5 |
| 11 | PY5 |
| 12 | W1 |
| 13 | W2 |
| 14 | W3 |

# FIG. 4

byte

| | | |
|---|---|---|
| 1 | 153 | ID of Stroke "乙" |
| 2 | 20 | X1 |
| 3 | 20 | Y1 |
| 4 | 121 | X2 |
| 5 | 22 | Y2 |
| 6 | 122 | X3 |
| 7 | 203 | Y3 |
| 8 | 215 | X4 |
| 9 | 222 | Y4 |
| 10 | 216 | X5 |
| 11 | 202 | Y5 |
| 12 | 12 | W1 |
| 13 | 21 | W2 |
| 14 | 15 | W3 |
| 15 | : | ID of Next Stroke |

*FIG. 5*

EP 0 735 496 A1

| | | |
|---|---|---|
| 1 | ID | |
| 2 | PX1 | |
| 3 | PY1 | |
| 4 | index | DPX2 |
| 5 | DPY2 | DPX3 |
| 6 | DPY3 | DPX4 |
| 7 | DPY4 | DPX5 |
| 8 | DPY5 | DW1 |
| 9 | DW2 | DW3 |

## FIG. 6

| | | | | | | | | | | |
|---|---|---|---|---|---|---|---|---|---|---|
| R1PX1 | R1PY1 | R1PX2 | R1PY2 | ········ | R1PXn | R1PYn | R1W1 | R1W2 | ········ | R1Wn |
| R2PX1 | R2PY1 | R2PX2 | R2PY2 | ········ | R2PXn | R2PYn | R2W1 | R2W2 | ········ | R2Wn |
| ········ | ········ | ········ | ········ | ········ | ········ | ········ | ········ | ········ | ········ | ········ |
| RNPX1 | RNPY1 | RNPX2 | RNPY2 | ········ | RNPXn | RNPYn | RNW1 | RNW2 | ········ | RNWn |

## FIG. 7

| ID |
|---|
| PX1 |
| PY1 |
| ⋮ |

# FIG. 8

| ID index | P1 index |
|---|---|
| DPX1 | DPY1 |
| ⋮ | |

# FIG. 9

**European Patent Office**

## EUROPEAN SEARCH REPORT

Application Number

EP 95 30 2137

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO-A-94 29782 (ELSEWARE CORP ;BAUERMEISTER BENJAMIN P (US); MCQUEEN CLYDE D III () 22 December 1994<br>* the whole document * | 1 | G06F17/21<br>G06K15/00 |
| A | PATENT ABSTRACTS OF JAPAN<br>vol. 015 no. 300 (P-1232) ,30 July 1991<br>& JP-A-03 103896 (RICOH CO LTD) 30 April 1991,<br>* abstract * | 1 | |
| A | PATENT ABSTRACTS OF JAPAN<br>vol. 016 no. 481 (P-1431) ,6 October 1992<br>& JP-A-04 171489 (RICOH CO LTD) 18 June 1992,<br>* abstract * | 1 | |
| A | PATENT ABSTRACTS OF JAPAN<br>vol. 018 no. 391 (P-1774) ,21 July 1994<br>& JP-A-06 110440 (RICOH CO LTD) 22 April 1994,<br>* abstract * | 1 | |
| | | | TECHNICAL FIELDS SEARCHED (Int.Cl.6) |
| A | PATENT ABSTRACTS OF JAPAN<br>vol. 018 no. 228 (P-1730) ,25 April 1994<br>& JP-A-06 019450 (RICOH CO LTD) 28 January 1994,<br>* abstract * | 1 | G06F<br>G06K |
| A | PATENT ABSTRACTS OF JAPAN<br>vol. 017 no. 502 (P-1610) ,9 September 1993<br>& JP-A-05 127648 (RICOH CO LTD) 25 May 1993,<br>* abstract * | 1 | |

-/--

The present search report has been drawn up for all claims

| Place of search | Date of completion of the search | Examiner |
|---|---|---|
| THE HAGUE | 16 August 1995 | Suendermann, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

# EP 0 735 496 A1

**European Patent Office**  **EUROPEAN SEARCH REPORT**

Application Number
EP 95 30 2137

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN vol. 018 no. 676 (P-1847) ,20 December 1994 & JP-A-06 266530 (CANON INC) 22 September 1994, * abstract * | 1 | |
| A | PATENT ABSTRACTS OF JAPAN vol. 012 no. 454 (M-769) ,29 November 1988 & JP-A-63 182157 (CANON INC) 27 July 1988, * abstract * | 1 | |
| | | | **TECHNICAL FIELDS SEARCHED** (Int.Cl.6) |

The present search report has been drawn up for all claims

| Place of search | Date of completion of the search | Examiner |
|---|---|---|
| THE HAGUE | 16 August 1995 | Suendermann, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12